Europäisches Patentamt

European Patent Office

Office européen des brevets

(11) Veröffentlichungsnummer: **0 234 300**
B1

# (12) EUROPÄISCHE PATENTSCHRIFT

(45) Veröffentlichungstag der Patentschrift:
10.05.89

(21) Anmeldenummer: 87101022.9

(22) Anmeldetag: 26.01.87

(51) Int. Cl.⁴: **B29C 55/30**, B29C 53/20

(54) Verfahren und Vorrichtung zum Herstellen von Hohlkörpern aus thermoplastischem Kunststoff.

(30) Priorität: 07.02.86 DE 3603843

(43) Veröffentlichungstag der Anmeldung:
02.09.87 Patentblatt 87/36

(45) Bekanntmachung des Hinweises auf die Patenterteilung:
10.05.89 Patentblatt 89/19

(84) Benannte Vertragsstaaten:
AT BE CH DE ES FR GB GR IT LI LU NL SE

(56) Entgegenhaltungen:
WO-A-86/00565
FR-A- 2 534 519
GB-A- 626 863
GB-A- 1 352 002
US-A- 4 065 951

(73) Patentinhaber: Krupp Corpoplast Maschinenbau GmbH.,
Angerburger Strasse 24, D-2000 Hamburg 70(DE)

(72) Erfinder: Albrecht, Peter, Sülzbrackring 1,
D-2050 Hamburg 80(DE)
Erfinder: Reymann, Wolfgang, Groten Hoff 15,
D-2000 Hamburg 67(DE)
Erfinder: Vogel, Klaus, Rütersberg 4 a,
D-2000 Barsbüttel(DE)
Erfinder: Werner, Hermann, Kirchenredder 4,
D-2000 Hamburg 63(DE)

(74) Vertreter: Koepsell, Helmut, Dipl.-Ing., Mittelstrasse 7,
D-5000 Köln 1(DE)

**Beschreibung**

Die Erfindung betrifft ein Verfahren und eine Vorrichtung zum Herstellen von Hohlkörpern aus orientiertem thermoplastischem Kunststoff, bei welchem der zylindrische Bereich eines hohlen, mit einem Boden versehenen, erwärmten Vorformlings bei einer Ausgangstemperatur, die unter der Glasumwandlungstemperatur liegt, unter gleichzeitiger Verringerung der Wandstärke durch einen mit einer Stützschulter versehenen Ziehring zu einem gestreckten Formling gestreckt wird und in den Vorformling zur Abstützung des zu streckenden Bereiches ein Dorn eingeführt wird, dessen Außendurchmesser dem Innendurchmesser des zu streckenden zylindrische Bereiches des Vorformlings entspricht.

Ein solches Verfahren wird, vorzugsweise unter Verwendung von Vorformlingen aus linearen Polyestern, also beispielsweise Polyäthylenteraphtalat (PETP) oder Polybutylenteraphtalat (PBTP), z.B. dann benutzt, wenn Behälter für Füllgüter, die unter Überdruck stehen, wie z.B. kohlensäurehaltige Getränke, herzustellen sind. Im allgemeinen wird dabei so vorgegangen, daß der erwärmte, etwa becherförmige Vorformling, der durch Spritzgießen hergestellt sein kann, relativ über einen Dorn gesteckt wird, dessen Länge zumindest der des gestreckten Formlings entspricht und dessen Außendurchmesser etwa dem Innendurchmesser des Vorformlinges entspricht, der mit dem des gestreckten Formlings im wesentlichen übereinstimmt. Der Streckvorgang wird im allgemeinen so ausgeführt, daß ein Ziehring, ausgehend vom bodenseitigen Ende des Vorformlings, entlang der zylindrischen Wandung desselben in Richtung auf dessen freies Ende bewegt wird. Dabei wird dieser Wandungsabschnitt unter gleichzeitiger merklicher Verringerung seiner Wandstärke z.B. auf das 3- bis 4-fache seiner Ausgangslänge gestreckt. Der Dorn hat unter anderem die Funktion, den zu streckenden Wandbereich abzustützen, um so eine Durchmesserverringerung desselben während des Streckvorganges zu verhindern.

Zur Erzielung einer hohen Durchsatzleistung ist anzustreben, den Streckvorgang mit möglichst hoher Geschwindigkeit durchzuführen, um so den dafür erforderlichen Zeitaufwand so gering wie möglich zu halten. Andererseits kann jedoch die Streckgeschwindigkeit nicht beliebig gesteigert werden, ohne dadurch die Qualität des Enderzeugnisses zu beeinträchtigen. In diesem Zusammenhang ist von Bedeutung, daß zwischen der Temperatur des Vorformlings und der zulässigen Geschwindigkeit des Streckvorganges ein Zusammenhang besteht insofern, als mit zunehmender Temperatur die Streckgeschwindigkeit erhöht werden kann. Die Anwendung höherer Streckgeschwindigkeiten erfordert demnach eine vorherige Erwärmung des Vorformlings, dessen Temperatur jedoch unterhalb der Glasumwandlungstemperatur liegt.

Zur Erzielung der für eine wirtschaftliche Fertigung erforderlichen hohen Durchsatzleistung müssen die einzelnen Verfahrensschritte sorgfältig aufeinander abgestimmt werden, wobei zwischen den einzelnen Arbeitsstationen Transportmittel vorzusehen sind, die die Vorformlinge in der gewünschten zeitlichen Folge von Station zu Station und ggf. auch innerhalb der Stationen transportieren. So ist der Arbeitsstation, in welcher der Streckvorgang durchgeführt wird, eine Temperierstation vorgeschaltet, in welcher der Vorformling auf eine Temperatur erwärmt wird, die möglichst hoch, jedoch unterhalb der Glasumwandlungstemperatur liegt. Bei der Verarbeitung von Polyäthylenteraphtalat (PETP) kommen dafür Temperaturen in Betracht, die z.B. im Bereich zwischen 65°C und 75°C liegen. Bei anderen Kunststoffen mögen andere Temperaturbereiche in Frage kommen. In allen Fällen gilt jedoch, daß, obwohl die Temperaturen unterhalb der Glasumwandlungstemperatur liegen, der so erwärmte Vorformling eine gewisse plastische Verformbarkeit aufweist. Dies kann bei der Handhabung des erwärmten Vorformlings, beispielsweise bei dessen Transport von der Temperierstation in die folgende Arbeitsstation, in welcher der Vorformling gestreckt wird, letzterer, insbesondere an seinem dem Boden abgekehrten Endbereich eine unerwünschte Verformung erfährt, die die zylindrische Wandung unrund werden läßt, so daß es beim folgenden Arbeitsschritt nicht oder jedenfalls nicht ohne weiteres möglich ist, den Dorn in den bereits erwärmten Vorformling einzuführen. Hierbei ist zu berücksichtigen, daß der Dorn an seinem freien Ende zur Erleichterung des Einführens in den Vorformling nicht oder nur geringfügig konisch sich verjüngend ausgebildet sein kann, da das freie Ende des Dorns in der wirksamen Lage desselben, also während des Ziehvorganges, am Übergang zwischen Boden und Wandung des Vorformlings konturengenau anliegen muß, da in oder nahe diesem Bereich der Ziehvorgang beginnt. Es ist für den einwandfreien Ablauf des Ziehvorganges, bei dem Kräfte von mehreren Tausend kN auftreten, unbedingt erforderlich, daß in der Anfangsphase der Ziehring richtig in Eingriff mit der Wandung des Vorformlings kommt. Dafür ist eine einwandfreie Abstützung des Vorformlings gerade am Übergang zwischen Boden und Wandung des Vorformlings Voraussetzung. Dies wäre dann nicht zu erreichen, wenn der Dorn zwecks Erleichterung des Einführens abgeschrägt wäre.

Mithin liegt der Erfindung unter anderem die Aufgabe zugrunde, Verfahren und Vorrichtung der einleitend beschriebenen Art so auszugestalten, daß auch bei der zur wirtschaftlichen Fertigung hohen Durchsatzleistung Dorn und Vorformling unter allen praktisch in Betracht kommenden Bedingungen störungsfrei in Eingriff miteinander gebracht werden können, um den Dorn in den Vorformling einzuführen. Die dazu erforderlichen Maßnahmen sollen sich nach Möglichkeit in den allgemeinen Arbeitsablauf einfügen, ohne diesen zu komplizieren. Der Zeitaufwand für diese Maßnahmen soll gering, ggf. vernachlässigbar klein sein. Dies gilt auch für den dazu erforderlichen konstruktiven und maschinentechnischen Aufwand.

Zur Lösung dieser Aufgabe schlägt die Erfindung vor, daß zumindest der dem Boden des Vorformlings abgekehrte Endbereich des bereits erwärmten Vorformlings vor dem Einführen des Dorns in denselben zur Beeinflussung der Querschnittsform des Vorformlings im Bedarfsfall nachgerichtet wird derart, daß der innere Querschnitt des Vorformlings zumindest im vorgenannten Endbereich den äußeren Querschnittsabmessungen des Dornes entspricht. D.h., daß zwischen dem Temperiervorgang und dem Ziehvorgang ein zusätzlicher Behandlungsschritt durchgeführt wird, durch welchen der Vorformling nachgerichtet wird, falls er eine unzulässige Verformung erfahren hat, die das Einführen des Dorns in den Vorformling hinein behindern würde. Dieser zusätzliche Behandlungsschritt sollte so in den Gesamt-Arbeitsablauf eingefügt sein, daß nach Beendigung des Nachrichtens sofort das Einführen des Dornes in den Vorformling möglich ist, um so weitere Handhabungen des Vorformlings, die wiederum zu unlässigen Verformungen desselben führen könnten, überflüssig zu machen. Dies kann dadurch erreicht werden, daß das Nachrichten des bereits erwärmten Vorformlings durch relatives Einführen desselben in eine Hülse erfolgt, deren Innenabmessungen den Außenabmessungen des zu beeinflussenden Bereichs des Vorformlings angepaßt sind. Dabei ist es ohne weiteres möglich, den bereits erwärmten Vorformling während des relativen Einführens in die Hülse bis in eine Endlage zu bringen, in welcher Vorformling und Ziehring die für den Beginn des Ziehvorganges erforderliche relative Lage zueinander einnehmen. Der Vorformling kann während des Einführens in die Hülse an seinem Boden zwischen einem unterseitig am Boden anliegenden Halterungsteil und einem oberseitig am Boden anliegenden Klemmteil gehalten werden. Der Boden des Vorformlings weist, da er nicht gestreckt wird, normalerweise eine Temperatur auf, bei welcher unzulässige Verformungen nicht zu befürchten sind.

Gemäß einem weiteren Vorschlag der Erfindung ist es vorteilhaft, den Dorn in den Vorformling einzuführen, während letzterer sich in der Hülse befindet.

Es ist zweckmäßig, die Wandung des Vorformlings während des Nachrichtvorganges auf einer Temperatur zu halten, die im wesentlichen der Verarbeitungstemperatur während des Ziehvorgangs entspricht. Dies kann auf einfache Weise durch entsprechende Beheizung von Hülse und/oder Dorn erfolgen. Der Vorteil einer solchen Anordnung besteht auch darin, daß es möglich ist, bei einer Unterbrechung des Arbeitsablaufs den in der Hülse befindlichen Vorformling über längere Zeit auf seiner Arbeitstemperatur zu halten, so daß nach Beseitigung der Störung der Arbeitsablauf fortgesetzt werden kann, ohne daß zunächst die Vorformlinge zwecks Wiedererwärmung aus den Arbeitsstationen entfernt werden müßten, in denen das Nachrichten des Vorformlings und ggf. auch das Recken desselben erfolgen.

Vorteilhaft ist die Vorrichtung zur Durchführung des vorbeschriebenen Verfahrens so ausgestaltet, daß dem Ziehring eine koaxial zu diesem verlaufende zylindrische Hülse zugeordnet ist, deren Innendurchmesser dem Soll-Außendurchmesser und deren Länge der axialen Erstreckung des ungestreckten Vorformlings entsprechen. Um das relative Einführen des Vorformlings in die Hülse zu erleichtern, kann diese mit einem konischen Einlauf versehen sein.

Als besonders vorteilhaft hat sich eine Ausführung herausgestellt, bei welcher die Hülse unmittelbar an den Ziehring anschließt. Diese Anordnung hat den Vorteil, daß beim Einführen des Vorformlings in die Hülse ersterer in demselben Arbeitsgang in die Position für den Ziehvorgang gebracht wird. Dabei können Hülse und Ziehring eine bauliche Einheit darstellen, so daß sie auch von einer gemeinsamen Halterung getragen werden können.

Das Klemmelement, welches einen kleineren Durchmesser aufweist als der Dorn und während des Einführens des Vorformlings in die Hülse oberseitig am Boden des Vorformlings anliegt, ist zweckmäßig innerhalb des Dornes diesem gegenüber axial verschiebbar angeordnet, wobei es in seiner Arbeitslage koaxial zur Hülse verläuft. Eine solche Anordnung hat den Vorteil, daß zunächst das Klemmelement in den Vorformling eingebracht wird, worauf dann später, nachdem der Vorformling sich in der Hülse befindet, der Dorn gegenüber dem in seiner wirksamen Lage bleibenden Klemmelement in den Vorformling eingeführt wird. Voraussetzung ist lediglich, daß der Dorn hohl ausgeführt ist, um das Klemmelement aufnehmen zu können.

Zwar sind aus der FR-A 2 534 519 Verfahren und Vorrichtung zum Behandeln von Vorformlingen aus thermoplastischem Material bekannt, wobei der Vorformling in eine Hülse eingeführt wird, deren Innenabmessungen den Außenabmessungen des Vorformlings angepaßt sind. In das dem Boden des Vorformlings abgekehrten offene Ende desselben wird ein Dorn eingeführt, der im Zusammenwirken mit der Hülse eine Verformung der zylindrischen Wandung des Vorformlinges herbeiführt. Das Einführen des Dornes in den Vorformling ist bei diesem bekannten Verfahren selbst dann gewährleistet, wenn das offene Ende des Vorformlings sehr stark verformt sein sollte, da der Außendurchmesser des freien Endes des Dornes wesentlich kleiner ist als der Innendurchmesser des Vorformlings im Bereich von dessen Öffnung. Mithin ist das Problem, das die Erfindung löst, bei dem bekannten Verfahren von vornherein nicht vorhanden. Außerdem bleibt bei diesem Verfahren das die Öffnung aufweisende Ende des Vorformlings außerhalb der Hülse, so daß ein Nachrichten des die Öffnung aufweisenden Endbereichs des Vorformlings ohnehin nicht in Betracht kommt.

In der Zeichnung ist ein Ausführungsbeispiel der Erfindung dargestellt. Es zeigen:

Fig. 1–4 im Schema die aufeinanderfolgenden Schritte beim Nachrichten eines erwärmten Vorformlings bis zum Beginn des Streckvorganges,

Fig. 5 in größerem Maßstab den Längsschnitt durch eine Vorrichtung zum Nachrichten und Strecken eines Vorformlings.

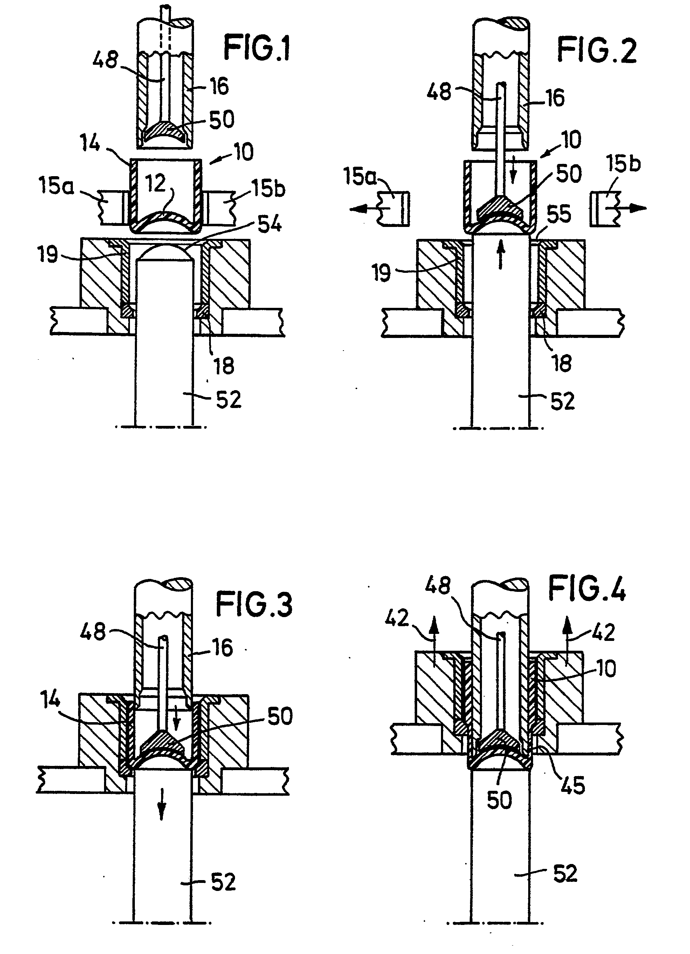

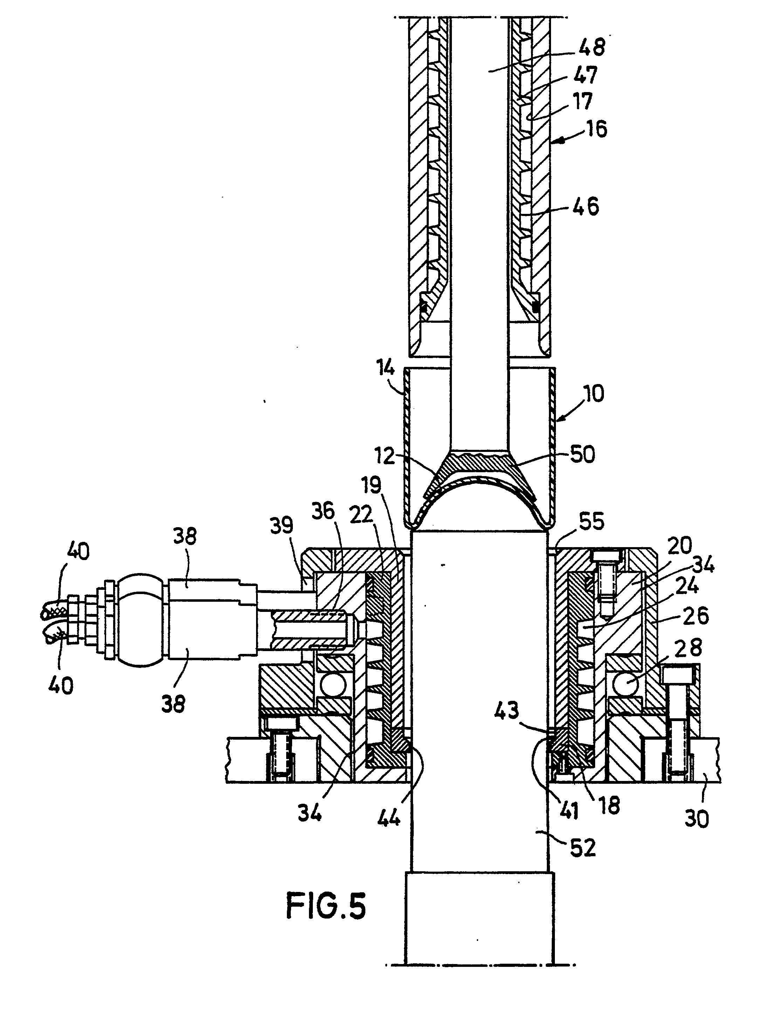

Der in den Figuren 1 bis 3 sowie in Fig. 5 dargestellte becherartige Vorformling 10 besteht aus einem nach innen gewölbte Bodenteil 12 und einer sich daran anschließenden, im wesentlichen zylindrischen Wandung 14, die zur Verbesserung der mechanischen Eigenschaften des herzustellenden Enderzeugnisses eine Streckung in Richtung des Verlaufs ihrer Längsachse derart erfährt, das beispielsweise die Wandung 14 auf etwa ein Drittel ihrer Ausgangsdicke reduziert wird.

Der z.B. durch Spritzgießen hergestellte Vorformling 10 wird zunächst in einer in der Zeichnung nicht dargestellten Station erwärmt derart, daß jedenfalls die Wandung 14 auf die für den Streckvorgang geeignete Temperatur gebracht wird. Der erwärmte Vorformling 10 wird dann durch einen aus zwei Teilen 15a, 15b bestehenden Greifer in die in den Figuren 1 bis 5 dargestellte Arbeitsstation gebracht, in welcher der Vorformling 10 nachgerichtet und dann gestreckt werden soll. Am Ende des Transportschrittes befindet sich der Vorformling zunächst in der Position gemäß Fig. 1 oberhalb einer Ziehvorrichtung mit einem Ziehring 18, wobei er immer noch von den Teilen 15a, 15b des Greifers gehalten wird.

In axialer Verlängerung des Ziehringes 18 und mit diesem fluchtend ist eine Hülse 19 angeordnet, deren Innendurchmesser dem Soll-Außendurchmesser und deren axiale Erstreckung der axialen Erstreckung des Vorformlings 10 entsprechen. Ziehring 18 und Hülse 19, die eine bauliche Einheit bilden, sind unter Zwischenschaltung eines ringförmigen Bauteils 22 in einer schalenförmigen Halterung 20 angeordnet, deren innere Mantelfläche mit dem ringförmigen Bauteil 22 ein Kanalsystem 24 für ein Kühl-und/oder Heizmedium begrenzt. Die aus dem mit genauer Passung zusammengefügten Teilen 18, 20, 22 bestehende Einheit ist innerhalb eines Gehäuses 26 angeordnet und über Kugellager 28 auf einer Konsole 30 gelagert, an welcher das Gehäuse 26 fest angebracht ist. Die Konsole 30 ist vertikal auf- und abbewegbar angeordnet. Fig. 5 der Zeichnung läßt erkennen, daß die Halterung 20 unter Belassung eines umlaufenden Ringspaltes in das Gehäuse 26 eingesetzt ist. D.h., daß Ziehring 18 mit Hülse 19 sowie Halterung 20 und Ring 22 in der Horizontalen um ein bestimmtes Ausmaß, welches durch die Breite des Spaltes 34 festgelegt ist, bewegbar, also schwimmend gelagert ist.

Die Halterung 20 ist mit zwei annähernd radial verlaufenden Durchbrechungen versehen, von denen die Durchbrechung 36 in Fig. 5 der Zeichnung dargestellt ist. Beide Durchbrechungen münden in dem Kanalsystem 24. In beiden Duchbrechungen ist, wie im Zusammenhang mit der Durchbrechung 36 dargestellt, jeweils ein Anschlußstück 38 eingeschraubt, welches mit jeweils einem Schlauch 40 verbunden ist. Für den Durchgang der Anschlußstücke 38 ist das Gehäuse 26 mit einer ebenfalls im wesentlichen radial verlaufenden Durchbrechung 39 versehen, deren Querabmessung so groß ist, daß die Anschlußstücke 38 irgendwelchen Bewegungen der Halterung 20 und damit des Ziehringes 18 und der Hülse 19 folgen können. Die Schläuche 40 dienen der Zuleitung und Ableitung eines Heiz-und/oder Kühlmediums.

Der Ziehring 18 ist innenseitig mit einer umlaufenden Stützschulter 41 versehen, die derart konisch verlaufend ausgebildet ist, daß der Innendurchmesser dieser Schulter entgegen der Ziehrichtung 42 (Fig. 4) abnimmt. Die Stützschulter 41 verbindet zwei Bereiche unterschiedlichen Innendurchmessers des Ziehringes 18. Im oberhalb der Schulter 41 befindlichen Bereich 43 größeren Innendurchmessers ist letzterer so gewählt, daß er geringfügig größer ist als der Außendurchmesser der zylindrischen Wandung 14 des Vorformlings 10 in ungestrecktem Zustand. Dies gilt auch für die Hülse 19, deren Innendurchmesser wenigstens annähernd ist dem Innendurchmesser 43 des Ziehringes oberhalb der Schulter 41. In dem unterhalb der Stützschulter 41 befindlichen Bereich 44 kleineren Innendurchmessers ist letzterer so gewählt, daß er geringfügig größer ist als der Außendurchmesser des bereits gestreckten Abschnittes 45 des Vorformlings 10 (Fig. 4).

Der Bearbeitungsstation ist weiterhin ein hohler Dorn 16 zugeordnet, der innenseitig mit einem an ihm befestigten ringförmigen Einsatz 47 versehen ist, der gemeinsam mit der inneren Begrenzungsfläche 17 des Dornes 16 ein Kanalsystem 46 für ein Heiz-und/oder Kühlmedium begrenzt. Innerhalb des ringförmigen Einsatzes 47 ist ein gegenüber dem Dorn 16 axial verschiebbarer Hilfsdorn 48 geführt, der an seinem unteren Ende ein Klemmelement 50 trägt, welches an die Form des Bodens 12 des Vorformlings 10 angepaßt ist und einen kleineren Durchmesser aufweist als der Dorn 16.

Weiterhin ist der Bearbeitungsstation ein axial verschiebbarer Bodenstempel 52 zugeordnet, der bei in der Arbeitsstation befindlichem Vorformling sich unterhalb desselben befindet. Das freie Ende des Bodenstempels 52 ist an die Gestalt des Bodens 12 des Vorformlings angepaßt. Der Außendurchmesser des Bodenstempels 52 ist kleiner als der kleinste Innendurchmesser des Ziehrings 18.

Ausgehend von der in Fig. 1 der Zeichnung dargestellten Lage der Teile zueinander, in welcher der erwärmte Vorformling 10 noch von den Greiferteilen 15a, 15b in einer Position gehalten wird, in welcher er sich axial zum darüber in einem Abstand befindlichen Dorn 16, zur Hülse 19 sowie Ziehring 18 und zum Unterstempel 52 befindet, wird zunächst Hilfsdorn 48 mit Klemmelement 50 nach unten in den Vorformling bis zur Anlage des Klemmelementes 50 am Boden 12 des Vorformlings und der Bodenstempel 52 nach oben bis zur Anlage von dessen Stirnfläche 54 am Boden des Vorformlings 12 verschoben. Der Dorn 16 behält dabei zunächst seine Position oberhalb des Vorformlings 10 bei. Nachdem letzterer durch das Klemmelement 50 des Hilfsdornes 48 und den Bodenstempel 52 in seiner Lage fixiert ist, wird der aus den Teilen 15a und 15b bestehende Greifer geöffnet, wie dies in Fig. 2 der Zeichnung dargestellt ist. Danach werden Hilfsdorn 48 und Bodenstempel 52 synchron unter Mitnahme des Vorformlings 10 nach unten in die in Fig. 3 dargestellte Lage verschoben. Im Zuge dieser Bewegung wird der Vorformling 10 in die Hülse 19 eingeführt und wieder in eine kreisförmige Querschnittsform gebracht, falls der Vorformling durch die Handhabung im Zuge der vorangegangenen Erwärmung und des Transportes unrund geworden ist. Sobald der Vorformling die in Fig. 3 dargestellte Endposition, in welcher er sich über seine gesamte axiale Länge innerhalb der Hülse 19 befindet, erreicht hat, kann der Dorn 16 in den Vorformling eingeführt werden. Die Innenabmessungen des Dornes 16 an seinem freien Ende und die Abmessungen des Klemmelementes 50 sind so gewählt, daß die an die Gestalt des Vorformlings angepaßte Stirnfläche des hohlen Dornes 16 zur Anlage an den innenseitigen Übergangsbereich zwischen Boden 12 und Wandung 14 des Vorformlings 10 gebracht wird, ohne daß das in Kontakt mit dem Boden 12 des Vorformlings 10 bleibende Klemmelement im Wege wäre.

Insbesondere Fig. 5 läßt erkennen, daß der Innendurchmesser der Hülse 19 kaum größer ist als der Außendurchmesser des Vorformlings 10. Das Einführen des Vorformlings 10 in die Hülse 19 wird dadurch erleichtert, daß letztere oberseitig mit einem konischen Einlauf 55 versehen ist, der das Einführen des Vorformlings 10 erleichtert. Hinzu kommt, daß die Wandung 14 des Vorformlings 10 im allemeinen schwach konisch mit einem Konuswinkel in der Größenordnung von 0,5° nach oben sich erweiternd ausgebildet ist. Diese Konizität dient beim Herstellen des Vorformlings im Spritzgießverfahren dazu, das Herausnehmen des Vorformlings aus der Spritzgießform zu erleichtern. Jedenfalls hat die Konizität zur Folge, daß der Durchmesser des Vorformlings 10 an seinem oberen, offenen Ende geringfügig größer ist als an seinem bodenseitigen Ende. Somit erfährt bei zylindrischer Ausgestaltung der Hülse 19 der obere Endbereich des Vorformlings 10 eine stärkere formgebende Behandlung im Sinne des Herbeiführens einer kreisförmigen Querschnittsform als der bodenseitige Endbereich. Dies trägt der Tatsache Rechnung, daß für das Einführen des Dornes 16 in den Vorformling 10 hinein im wesentlichen nur auf die Anfangsphase des Einführens entscheidend ist. Sobald die Stirnfläche des hohlen Dornes 16 sich unterhalb des oberen Randes des Vorformlings 10 innerhalb desselben befindet, würden ggf. noch vorhandene Unregelmäßigkeiten bezüglich der Querschnittsform der Wandung 14 des Vorformlings durch den nach unten sich bewegenden Dorn ausgeglichen werden.

Wenngleich beim Einführen in die Hülse 19 die das Nachrichten bewirkenden Kräfte lediglich auf die äußere Begrenzung der Wandung 14 des Vorformlings 10 einwirken, erfolgt dadurch auch gleichzeitig eine entsprechende Formgebung der inneren Begrenzung der Wandung 14. Da insbesondere bei Herstellung des Vorformlings 10 im Spritzgießverfahren die Wandstärke der Wandung 14 gleichmäßig und genau herstellbar ist, hat somit eine Beeinflussung der Querschnittsform der Wandung auch zugleich die gewünschte Beeinflussung der Querschnittsform der Öffnung, in die der Dorn 16 einzuführen ist, zur Folge.

Da Ziehring 18 und Hülse 19 schwimmend gelagert sind, kann die Möglichkeit nicht ausgeschlossen werden, daß diese Teile bei der z.B. in Fig. 5 der Zeichnung dargestellten Situation sich in einer exzentrischen, also gegenüber der gemeinsamen Mittelachse von Dorn 16, Vorformling 10 und Bodenstempel 52 seitlich verschobenen Lage befinden. Durch das Einführen des Vorformlings 10 in die Hülse 19 erfolgt insbesondere auch durch die Wirkung des Einlaufs 55 eine zwangsweise Zentrierung der Teile 18 und 19. Mithin ist für den nachfolgenden Ziehvorgang in jedem Fall die richtige Ausgangslage des Ziehringes 18 zum Vorformling 10 gewährleistet, ohne daß dazu besondere Vorkehrungen notwendig wären.

Im übrigen ergibt sich insbesondere aus der zeichnerischen Darstellung des Arbeitsablaufes, daß das Nachrichten des Vorformlings 10 ohnehin keinen besonderen Arbeitsgang erfordert, da es im Zuge eines Arbeitsschrittes erfolgt, der ohnehin notwendig ist, um Vorformling 10 und Ziehring 18 in die für den Ziehvorgang erforderliche relative Ausgangslage zu bringen.

Die Dorn 16 und Hülse 19 zugeordneten Heizeinrichtungen können dazu dienen, die Temperatur des Vorformlings vor dem und während des Ziehvorganges auf der für den Ziehvorgang optimalen Temperatur zu halten. Bei der in Fig. 3 dargestellten Lage der Teile zueinander könnte der Vorformling 10 bei einer Störung in der Vorrichtung zum Handhaben und Bearbeiten des Vorformlings auch längere Zeit in der Hülse 19 bleiben, ohne daß er eine merkliche Verringerung seiner Temperatur erfährt.

Fig. 4 zeigt die Vorrichtung mit dem darin befindlichen Vorformling 10 nach Beginn des Streckvorganges, in dessen Verlauf die von der Konsole 30 getragene Baueinheit gegenüber Dorn 16 und Bodenstempel 52 sowie dem von diesen beiden Teilen gehaltenen Vorformling 10 nach oben bewegt wird.

Selbstverständlich ist es hier wie auch bei anderen vorbeschriebenen Bewegungen der Teile möglich, die absoluten Bewegungen umzukehren, also beispielsweise derart, daß der Vorformling mit den ihn haltenden Teilen 16 und 52 gegenüber der feststehenden Konsole und der von diesem getragenen Ziehring 18 nach unten bewegt wird. Es sind auch gleichzeitige einander entgegengerichtete Bewegungen von Vorformling 10 und Ziehring 18 möglich. Entsprechendes gilt für das Einführen des Dornes 16 in den Vorformling 10.

**Patentansprüche**

1. Verfahren zum Herstellen von Hohlkörpern aus orientiertem thermoplastischem Kunststoff, bei welchem der zylindrische Bereich eines hohlen, mit einem Boden (12) versehenen erwärmten Vorformlings (10) bei einer Ausgangstemperatur, die unter der Glasumwandlungstemperatur liegt, unter gleichzeitiger Verringerung der Wandstärke durch einen mit einer Stützschulter versehenen Ziehring (18) zu einem gestreckten Formling gestreckt wird und in den Vorformling zur Abstützung des zu streckenden Bereiches ein Dorn (16) eingeführt wird, dessen Außendurchmesser dem Innendurchmesser des zu streckenden zylindrischen Bereiches (14) des Vorformlings (10) entspricht, dadurch gekennzeichnet, daß zumindest der dem Boden (12) des Vorformlings (10) abgekehrte Endbereich des erwärmten Vorformlings vor dem Einführen des Dorns (16) in denselben zur Beeinflussung der Querschnittsform des Vorformlings (10) im Bedarfsfall nachgerichtet wird derart, daß der innere Querschnitt des Vorformlings (10) zumindest im vorgenannten Endbereich den äußeren Querschnittsabmessungen des in den Vorformling (10) einzuführenden Abschnittes des Dorns (16) entspricht.

2. Verfahren nach Anspruch 1, dadurch gekennzeichnet, daß das Nachrichten des bereits erwärmten Vorformlings (10) durch relatives Einführen desselben in eine Hülse (19) erfolgt, deren Innenabmessungen den Soll-Außenabmessungen des zu beeinflussenden Bereiches des Vorformlinges (10) angepaßt sind.

3. Verfahren nach Anspruch 1 oder 2, dadurch gekennzeichnet, daß der bereits erwärmte Vorformling (10) während des relativen Einführens in die Hülse (19) bis in eine Endlage gebracht wird, in welcher Vorformling (10) und Ziehring (18) die für den Beginn des Ziehvorganges erforderliche relative Lage zueinander einnehmen.

4. Verfahren nach Anspruch 1, dadurch gekennzeichnet, daß der bereits erwärmte Vorformling (10) während des Einführens in die Hülse (19) an seinem Boden (12) zwischen einem unterseitig am Boden anliegenden Halterungsteil (52) und einem oberseitig am Boden (12) anliegenden Klemmteil (50) gehalten wird.

5. Verfahren nach Anspruch 1, dadurch gekennzeichnet, daß der Dorn (16) in den Vorformling (10) eingeführt wird, während letzterer sich in der Hülse (19) befindet.

6. Verfahren nach Anspruch 1, dadurch gekennzeichnet, daß die Wandung (14) des Vorformlings (10) während des Nachrichtvorganges auf einer Temperatur gehalten wird, die im wesentlichen der Verarbeitungstemperatur während des Ziehvorganges entspricht.

7. Vorrichtung zum Herstellen von Hohlkörpern aus orientiertem thermoplastischem Kunststoff aus einem erwärmten, mit einem Boden (12) versehenen Vorformling (10), dessen Wandung (14) bei einer Ausgangstemperatur, die unter der Glasumwandungstemperatur liegt, unter gleichzeitiger Verringerung der Wandstärke durch einen mit einer konischen Stützschulter versehenen Ziehring (18) zu einem gestreckten Formling gestreckt wird und während des Streckvorganges innerhalb des Vorformlinges (10) zur Abstützung des zu streckenden Bereiches desselben ein Dorn (16) angeordnet ist, dessen Außendurchmesser dem Innendurchmesser des zu streckenden zylindrischen Bereiches entspricht, dadurch gekennzeichnet, daß dem Ziehring (18) zum Nachrichten des Vorformlings (10) eine koaxial zum Ziehring (18) verlaufende zylindrische Hülse (19) zugeordnet ist, dessen Innendurchmesser dem Soll-Außendurchmesser und deren Länge der axialen Erstreckung des ungestreckten Vorformlings (10) entsprechen.

8. Vorrichtung nach Anspruch 7, dadurch gekennzeichnet, daß die Hülse (19) für das relative Einführen des Vorformlings (10) mit einem konischen Einlauf (55) versehen ist.

9. Vorrichtung nach Anspruch 7, dadurch gekennzeichnet, daß die Hülse (19) dem Ziehring (18) vorgelagert ist.

10. Vorrichtung nach Anspruch 7, dadurch gekennzeichnet, daß Ziehring (18) und Hülse (19) von einer gemeinsamen Halterung (20) getragen sind.

11. Vorrichtung nach Anspruch 7, dadurch gekennzeichnet, daß der Innendurchmesser der Hülse (19) gleich dem größten Durchmesser des Ziehrings (18) oberhalb der Schulter (41) desselben ist.

12. Vorrichtung nach Anspruch 7, dadurch gekennzeichnet, daß dem Dorn (16) ein Klemmelement (50) kleineren Durchmessers zum Festhalten des Vorformlings (10) zugeordnet ist, welches relativ axial gegenüber dem hohlen Dorn (16) innerhalb desselben verschiebbar ist und in seiner Arbeitslage koaxial zur Hülse (19) verläuft.

13. Vorrichtung nach einem der vorhergehenden Ansprüche, dadurch gekennzeichnet, daß die Hülse (19) mit einer Heizeinrichtung versehen ist.

14. Vorrichtung nach einem der vorhergehenden Ansprüche, dadurch gekennzeichnet, daß der Dorn (16) mit einer Heizeinrichtung versehen ist.

**Revendications**

1. Procédé de fabrication de corps creux en matière thermoplastique orientée, à partir d'une préforme (10) qui comporte une partie cylindrique creuse et un fond (12), consistant à réchauffer d'abord cette partie cylindrique à une température de départ, située en dessous de la température de vitrification, puis à étirer cette partie cylindrique pour réduire l'épaisseur de sa paroi en la faisant passer par une bague d'étirage (18) pourvue d'un épaulement d'appui, de manière à obtenir une préforme étirée, la partie cylindrique à étirer (14) de la préforme (10) étant soutenue par un mandrin (16) qui est préalablement introduit dans la préforme (10) et dont le diamètre extérieur correspond au diamètre intérieur de la partie cylindrique (14) de la préforme qu'il s'agit d'étirer, procédé caractérisé en ce qu'on rectifie la forme en section transversale de la préforme (10) réchauffée avant d'introduire le mandrin (16) dans celle-ci, cette rectification portant au moins sur la partie terminale de la préforme (10) opposée au fond (12) de cette dernière, de telle manière que la section transversale intérieure de la préforme (10), au moins dans la partie terminale précitée de celle-ci, corresponde aux côtés extérieures en section transversale de la partie du mandrin (16) qui doit pénétrer dans ladite préforme (10).

2. Procédé selon la revendication 1, caractérisé en ce que l'on effectue la rectification de la préforme (10) préalablement réchauffée, par un mouvement relatif d'introduction de la préforme dans une douille (19) dont les côtés intérieures sont adaptées aux côtés extérieures prévues pour la partie à rectifier de la préforme (10).

3. Procédé selon l'une des revendications 1 ou 2, caractérisé en ce que la préforme (10) préalablement réchauffée, se trouve amenée à la fin de son mouvement relatif d'introduction dans la douille (19), dans une position finale telle que ladite préforme (10) et la bague d'étirage (18) occupent des positions relatives correctes pour le début de l'opération d'étirage.

4. Procédé selon la revendication 1, caractérisé en ce que la préforme (10) préalablement réchauffée est maintenue par son fond (12) pendant son introduction dans la douille (19), entre un organe de maintien (52) en appui contre la face inférieure du fond (12) et un organe de serrage (50) en appui contre la face supérieure dudit fond (12).

5. Procédé selon la revendication 1, caractérisé en ce que l'on fait pénétrer le mandrin (16) dans la préforme (10) alors que celle-ci se trouve dans une douille (19).

6. Procédé selon la revendication 1, caractérisé en ce que l'on maintient à une température déterminée la paroi (14) de la préforme (10) pendant la rectification de forme de celle-ci, cette température correspondant sensiblement à la température de façonnage prévue pendant l'étirage.

7. Dispositif de fabrication de corps creux en matière thermoplastique orientée, à partir d'une préforme (10) réchauffée au préalable, cette préforme comportant un fond (12) et une paroi (14) qui se trouve à une température de départ inférieure à la température de vitrification, et qu'on soumet à une opération d'étirage au moyen d'une bague d'étirage (18) pourvue d'un épaulement d'appui de profil conique, pour obtenir une préforme étirée, en réduisant en même temps l'épaisseur de la paroi de cette préforme, ce dispositif comportant en outre un mandrin (16) destiné à être disposé dans la préforme à traiter (10), pour en soutenir la partie à étirer, et présentant un diamètre extérieur qui correspond au diamètre intérieur de la partie à étirer de la préforme, dispositif caractérisé en ce qu'il comporte en plus une douille cylindrique (19), associée à la bague d'étirage (18) et coaxiale à celle-ci, pour rectifier la forme de la préforme à traiter (10), cette douille (19) présentant un diamètre intérieur qui correspond au diamètre extérieur prévu pour la préforme à traiter (10), et une longueur qui correspond à la longueur de cette même préforme avant étirage.

8. Dispositif selon la revendication 7, caractérisé en ce que la douille (19) prévue pour recevoir la préfome (10) est pourvue d'une entrée conique (55), pour faciliter le mouvement relatif d'introduction de la préforme (10) dans ladite douille (19).

9. Dispositif selon la revendication 7, caractérisé en ce que la douille (19) est disposée en avant de la bague d'étirage (18).

10. Dispositif selon la revendication 7, caractérisé en ce que la bague d'étirage (18) et la douille (19) sont fixées à un support commun (20).

11. Dispositif selon la revendication 7, caractérisé en ce que le diamètre intérieur de la douille (19) est égal au plus grand diamètre de la bague d'étirage (18) au-dessus de l'épaulement (41) de cette bague.

12. Dispositif selon la revendication 7, caractérisé e ce qu'au mandrin (16) est associé un organe de serrage (50) de moindre diamètre pour maintenir la préforme (10), cet organe de serrage (50) étant monté coulissant à l'intérieur du mandrin (16) qui est creux, pour pouvoir se déplacer axialement par rapport audit mandrin (16) et s'enfoncer coaxialement en position de travail dans la douille (19).

13. Dispositif selon l'une des revendications 7 à 12, caractérisé en ce que la douille (19) est pourvue d'un système de chauffage.

14. Dispositif selon l'une des revendications 7 à 13, caractérisé en ce que le mandrin (16) est pourvu d'un système de chauffage.

**Claims**

1. A process for producing hollow bodies of oriented thermoplastic material wherein the cylindrical region of a hollow heated preform (10) which is provided with a bottom (12) is subjected to stretching at a starting temperature which is below the vitreous transition temperature, with the wall thickness being reduced at the same time, through a drawing ring (18) provided with a support shoulder, to provide a stretched shaped member, and a mandrel (16) is inserted into the preform to support the region to be subjected to stretching, the outside diameter of the mandrel corresponding to the inside diameter of the cylindrical region (14) of the preform (10), which is to be subjected to stretching, characterised in that prior to insertion of the mandrel (16) into the heated preform (10), to influence the cross-sectional shape of the preform (10), the end region o the heated preform, which is remote from the bottom (12) of the preform (10), is if necessary subjected to an aligning operation in such a way that the internal cross-section of the preform (10), at least in said end region, corresponds to the external cross-sectional dimensions of the portion of the mandrel (16), which is to be inserted into the preform (10).

2. A process according to claim 1 characterised in that the aligning operation in respect of the already heated preform (10) is effected by relative insertion thereof into a sleeve (19), the internal dimensions of which are adapted to the desired external dimensions of the region of the preform (10), which is to be influenced.

3. A process according to claim 1 or claim 2 characterised in that, during the operation of relative insertion of the already heated preform (10) into the sleeve (19), the preform (10) is moved into an end position in which the preform (10) and the drawing ring (18) take up the relative position with respect to each other necessary for beginning the drawing operation.

4. A process according to claim 1, characterised in that, during insertion into the sleeve (19), the already heated preform (10) is held at its bottom (12) between a holding member (52) which bears against the bottom at the underside thereof, and a clamping member (50) which bears against the bottom (12) at the top side thereof.

5. A process according to claim 1, characterised in that the mandrel (16) is inserted into the preform (10) while the latter is in the sleeve (19).

6. A process according to claim 1, characterised in that during the aligning operation the wall (14) of the preform (10) is maintained at a temperature which substantially corresponds to the processing temperature during the drawing operation.

7. Apparatus for producing hollow bodies of oriented thermoplastic material from a heated preform (10) which is provided with a bottom (12) and the wall (14) of which is subjected to drawing to provide a stretched shaped member, at a starting temperature which is below the vitreous transition temperature, with the wall thickness being reduced at the same time, by means of a drawing ring (18) provided with a conical support shoulder, and during the stretching operation a mandrel (16) is arranged within the preform (10) to support the region thereof which is to be subjected to stretching, the outside diameter of the mandrel corresponding to the inside diameter of the cylindrical region to be stretched, characterised in that associated with the drawing ring (18) for aligning of the preform (10) is a cylindrical sleeve (19) which is coaxial with respect to the drawing ring (18) and whose inside diameter corresponds to the desired outside diameter and whose length corresponds to the axial extent of the unstretched preform (10).

8. Apparatus according to claim 7 characterised in that the sleeve (19) is provided with a conical entry (55) for relative insertion of the preform (10).

9. Apparatus according to claim 7 characterised in that the sleeve (16) is disposed upstream of the drawing ring (18).

10. Apparatus according to claim 7 characterised in that the drawing ring (18) and the sleeve (19) are carried by a common mounting means (20).

11. Apparatus according to claim 7 characterised in that the inside diameter of the sleeve (19) is equal to the largest diameter of the drawing ring (18) above the shoulder (41) thereof.

12. Apparatus according to claim 7, characterised in that associated with the mandrel (16) is a clamping element (50) of smaller diameter for holding the preform (10), the clamping element (50) being relatively axially displaceable with respect to the hollow mandrel (16) within the same and in its operating position extending coaxially with respect to the sleeve (19).

13. Apparatus according to one of the preceding claims characterised in that the sleeve (19) is provided with a heating means.

14. Apparatus according to one of the preceding claims characterised in that the mandrel (16) is provided with a heating means.

FIG.1

FIG.2

FIG.3

FIG.4

FIG.5